(19) Europäisches Patentamt

European Patent Office

Office européen des brevets

(11) Veröffentlichungsnummer: **0 277 570 B1**

(12) **EUROPÄISCHE PATENTSCHRIFT**

(45) Veröffentlichungstag der Patentschrift: **15.07.92**

(21) Anmeldenummer: **88101000.3**

(22) Anmeldetag: **25.01.88**

(51) Int. Cl.⁵: **D21C 5/02**

(54) **Verfahren zum De-inken von bedrucktem Altpapier.**

(30) Priorität: **02.02.87 DE 3702978**

(43) Veröffentlichungstag der Anmeldung:
**10.08.88 Patentblatt 88/32**

(45) Bekanntmachung des Hinweises auf die
Patenterteilung:
**15.07.92 Patentblatt 92/29**

(84) Benannte Vertragsstaaten:
**AT BE CH DE ES FR GB IT LI NL SE**

(56) Entgegenhaltungen:
**EP-A- 0 067 333**
**DE-A- 3 144 387**

(73) Patentinhaber: **Chemische Fabrik Grünau
GmbH
Robert-Hansen-Strasse 1
W-7918 Illertissen(DE)**

(72) Erfinder: **Lehmann, Klaus
Krautgarten 10
W-7918 Illertissen(DE)**
Erfinder: **Domsch, Andreas, Dr.
Liebigstrasse 32
W-7918 Illertissen(DE)**
Erfinder: **Hawel, Hans
Riedstrasse 34
W-7917 Vöhringen(DE)**

## Beschreibung

Die Erfindung betrifft ein verfahren zum De-inken von bedrucktem Altpapier durch Behandeln des Papierstoffes im Stofflöser bei alkalischen pH-Werten mittels Alkalimetallsilikat, oxidativ wirkenden Bleichmitteln, höheren Fett- und/oder Harzsäuren und Dispergiermitteln sowie Ausscheiden der abgelösten Druckfarbenteilchen aus der Faserstoffsuspension durch Flotation.

Unter De-inken versteht man die selektive Entfernung von Druckfarben aus der Altpapierfasersuspension. Der so gewonnene Gutstoff wird in Abhängigkeit vom jeweiligen Ausgangsmaterial zu Endprodukten wie z.B. Schreibpapier, Druckpapier, Hygienepapier, etc., verarbeitet.

Wesentliche Fakten beim De-inking-Verfahren sind, daß zunächst die Druckfarben im Stofflöser von der Faser mittels geeigneter Chemikalien abgelöst und anschließend aus der Fasersuspension selektiv ausgeschieden werden. Dieses geschieht sowohl beim Flotations- als auch beim Wasch-Deinking in alkalischem Milieu, wobei die Druckfarbenentfernung in Flotationszellen bzw. Wäschern erfolgt. Der resultierende Gutstoff wird dann der Produktion zugeführt.

Eine üblicherweise verwendete Chemikalienrezeptur kann hierbei wie folgt aussehen: (Dosierungen jeweils bezogen auf Trockenstoff des Altpapiers)

0,5 bis 2,0 Gew.-%
Alkalimetallhydroxid (100 %ig)
0,2 bis 1,5 Gew.-%
Seife oder Fettsäure (100 %ig)
0,05 bis 0,1 Gew.-%
nichtionogener Dispergator (100 %ig)
2,0 bis 5,0 Gew.-%
Alkalimetallsilikat (Wasserglas)
0,1 bis 0,3 Gew.-%
DiethylentriaminpentaessigsäureNa-Salz (DTPA) (40 %ig)
0,5 bis 3,0 Gew.-%
oxidatives Bleichmittel (100 %ig)

Die Wirkungsmechanismen der einzelnen Chemikalien beim Flotationsprozeß sind hierbei die folgenden:

Alkalimetallhydroxid, vorzugsweise Natriumhydroxid, bewirkt eine Faserquellung und erleichtert somit die Auflösung des Faserverbandes sowie die Druckfarbenabtrennung. Diese wird durch Neutralisation bzw. Verseifung von Druckfarbenbindemitteln zusätzlich begünstigt. Außerdem liefert Natriumhydroxid die zur Neutralisation von Fettsäuren erforderliche Alkalität, die zu deren Funktion als Sammler erforderlich ist.

Nichtionogene Dispergiermittel bewirken durch Absenkung der Oberflächenspannung des Wassers eine verbesserte Faserbenetzung, wodurch unter anderem die Wirkung der anderen Chemikalien begünstigt wird, im wesentlichen jedoch die Ablösung der Druckfarben und deren Dispergierung erfolgt. Durch die Dispergierung der Druckfarben wird eine Wiederanlagerung an die Faser verhindert bzw. erschwert.

Durch den Sammler, d.h. Fettsäuren oder Seifen, werden die abgelösten Pigmente hydrophobiert, wodurch eine selektive Entfernung möglich wird. Für diese Funktion sind bei den bisher verwendeten anionaktiven Sammlern neben dem alkalischen Milieu die Härtebildner des Wassers von entscheidender Bedeutung, da nur deren Calciumsalze eine Hydrophobierung der Druckfarbenpartikel bewirken und diese so flotierbar machen. Oxidative Bleichmittel verhindern bzw. kompensieren die Vergilbung des holzhaltigen Altpapieranteiles und bewirken darüber hinaus - je nach Dosierung - eine zusätzliche Faserbleiche. Zu deren Stabilisierung werden Alkalisilikat und DTPA eingesetzt, die durch Komplexierung der Schwermetalle eine zu schnelle Zersetzung des Bleichmittels verhindern.

Als Altpapiere kommen je nach angestrebtem Endprodukt Zeitungen, Illustrierte, Computerpapiere, Akten etc., in den meisten Fällen jedoch deren Mischungen zum Einsatz, wobei über deren Deinkbarkeit die angewandten Druckfarbensysteme neben deren Alter eine entscheidende Rolle spielen.

Die Beurteilung des Papiers nach dem Deinking-Prozeß erfolgt über eine Weißgradmessung, wobei der Weißgehalt des Prüfblattes mit dem eines Standards (z.B. Bariumsulfat bei Weißgradmessung nach Elrepho) verglichen und in Prozent angegeben wird. Bei Verwendung einer Altpapiermischung aus Tageszeitungen-Illustrierten im Verhältnis 1 : 1 resultiert z.B. ein Weißgehalt von 56 bis 60 %, wobei der Weißgehalt der unbedruckten Randstreifen dieser Altpapiere ca. 65 bis 68 % beträgt.

Die DE-A-29 03 150 beschreibt ein Verfahren zum Deinken von bedrucktem Altpapier durch Behandeln des Papierstoffes im Stofflöser bei alkalischen pH-Werten mittels Alkalisilikat, oxidativ wirkenden Bleichmitteln, höheren Fettsäuren oder deren Salzen und nichtionogenen Dispergiermitteln und Ausscheiden der abgelösten Druckfarbenteilchen aus der Faserstoffsuspension durch Flotation, wobei man im Stofflöser zusätzlich ein Fettsäurealkanolamid verwendet.

Demgegenüber beschreibt die DE-C-31 23 353 ein ähnliches Verfahren, das sich von dem der vorgenannten DE-A-29 03 150 dadurch unterscheidet, daß im Stofflöser kein Fettsäurealkanolamid verwendet wird und zum anderen dadurch, daß die Fettsäuren und/oder Harzsäuren und die Dispergiermittel in Form einer Öl-in-Wasser-Emulsion zugesetzt werden.

Die bekannten Verfahren weisen jedoch einige Nachteile auf.

Bei Einsatz von festen Fettsäuren als Sammler benötigt man Schmelzvorrichtungen oder aber beheizte Lagerbehälter, wenn diese bereits geschmolzen angeliefert werden.

Die Beheizung entfällt, wenn Fettsäuren verwendet werden, deren Schmelzpunkte unter dem Normaltemperaturbereich liegen, wobei diese jedoch meistens anwendungstechnische Nachteile aufweisen.

Bei den Reaktionsbedingungen im Stofflöser verseifen die höher schmelzenden und flüssigen Fettsäuren nur langsam, wobei die an der Oberfläche der Fettsäurepartikel entstehenden Seifen die weitere Verseifung der eingeschlossenen Fettsäuren erschweren bzw. sogar verhindern. Dieser Tatbestand hat nicht nur eine Verminderung des Sammlereffektes zur Folge, sondern kann über eine Faserhydrophobierung durch die unverseiften Fettsäuren zu verstärkter Faserflotation führen.

Um diese Nachteile zu umgehen, werden gemäß dem Stand der Technik den Lagertanks Verseifungsanlagen nachgeschaltet. Die resultierenden wäßrigen Seifenlösungen müssen dann bis zur Verarbeitung permanent getempert werden, da diese bei Normaltemperatur Gele bilden, d.h. der Zwischenlagerbehälter sowie die Dosierleitungen inklusive Dosierkopf der Dosierpumpe müssen thermisch isoliert und durchgehend beheizt werden.

Werden feste Seifen eingesetzt, erübrigt sich eine Verseifungsanlage. Da die vollständige Löslichkeit der Seifengranulate unter den prozeßabhängigen Bedingungen in den meisten Fällen nicht gegeben ist, müssen zur Verhinderung von Negativeffekten Löseanlagen installiert werden. Für die hierbei resultierenden Seifenlösungen gelten dann wieder die vorstehend beschriebenen Nachteile.

Ein weiterer beträchtlicher Nachteil der bekannten Verfahren ist ferner darin zu sehen, daß die vorstehend erörterte Bildung von Calciumseifen der Fettsäuren - die ja erst als Sammler wirksam werden - erst während des De-inking-Prozesses im Stofflöser mit dem Härtebildner des eingesetzten Wassers sukzessiv erfolgt. Die hierfür benötigte Reaktionszeit verlängert mithin die insgesamt erforderliche Prozeßdauer; eine unvollständige Umsetzung bedingt zudem schlechtere De-inking-Resultate, die sich beispielsweise auch in verminderten Weißgraden widerspiegeln. Diese Nachteile weisen auch solche Verfahren auf, bei denen die Fettsäuren in Form einer Emulsion eingesetzt werden.

In der DE-A-31 44 387 wird ferner ein Verfahren zur Altpapieraufbereitung mittels Flotation beschrieben, bei welchem man eine Calciumseifenlösung herstellt und diese der Altpapiersuspension vor der Flotation zugibt. Die Herstellung der Calciumseifen erfolgt dergestalt, daß man zunächst aus Fettsäuren und Natriumhydroxid die entsprechenden Seifen gewinnt und diese dann bei 50 bis 90 °C mit gebranntem Kalk oder Kalkmilch zu den entsprechenden Kalkseifen umsetzt. Wichtig ist hierbei, daß man die erzeugte Kalkseife unmittelbar nach ihrer Herstellung oder in einem diesem entsprechenden Zustand unverändert der Altpapiersuspension zugibt. Somit ist es im Rahmen dieses Verfahrens bevorzugt, bei erhöhter Temperatur die Calciumseife kontinuierlich zu erzeugen und unmittelbar und kontinuierlich der Altpapiersuspension vor der Flotationsstufe zuzugeben.

Demgegenüber hat sich die Erfindung zur Aufgabe gestellt, ein verbessertes Verfahren zum Deinken von bedrucktem Altpapier zur Verfügung zu stellen, welches die vorstehend erörterten Nachteile nicht aufweist und darüber hinaus zu besseren Weißgraden führt. Insbesondere bestand die Aufgabe der vorliegenden Erfindung auch darin, einen Sammler zu entwickeln, der den Einsatz von festen Fettsäuren als Sammler ermöglicht, wobei jedoch auf Schmelzvorrichtungen oder beheizte Lagerbehälter verzichtet werden kann.

Die vorstehende Aufgabe wird dadurch gelöst, daß man die Fett- und/oder Harzsäuren in Form ihrer Erdalkalimetallsalze in feiner Verteilung zusammen mit Dispergiermittel in einer bei Normaltemperatur flüssigen Öl-in-Wasser-Dispersion einsetzt.

Gegenstand der Erfindung ist somit ein Verfahren zum De-inken von bedrucktem Altpapier durch

(a) Behandeln des Papierstoffes im Stofflöser bei alkalischen pH-Werten mittels Alkalimetallsilikat, oxidativ wirkenden Bleichmitteln, höheren Fett- und/oder Harzsäuren mit 8 bis 22 C-Atomen, Dispergiermitteln und

(b) Ausscheiden der abgelösten Druckfarbenteilchen aus der Faserstoffsuspension durch Flotation,

dadurch gekennzeichnet, daß man die Fettund/oder Harzsäuren in Form ihrer Erdalkalimetallsalze in feiner Verteilung zusammen mit Dispergiermittel in einer bei Normaltemperatur im Bereich Von 4 bis 30 °C flüssigen Öl-in-Wasser-Dispersion einsetzt.

Als Erdalkalimetallsalze der Fett- und/oder Harzsäuren kommen beispielsweise die entsprechenden Salze von Magnesium, Calcium, Strontium oder Barium bzw. Gemische derselben in Frage. Bevorzugt werden die Fett- und/oder Harzsäuren jedoch in Form ihrer Calciumsalze eingesetzt. Wenn in den nachfolgenden Ausführungen daher nur noch von Calciumsalzen die Rede ist, so beziehen sich diese Ausführungen in gleicher Weise auch auf die übrigen Erdalkalimetallsalze.

Beim Verfahren gemäß der Erfindung ist daher keine Reaktionszeit für die Umsetzung mit dem Alkalimetallhydroxid der Chemikalienflotte und den Härtebildnern des Wassers erforderlich, was bei den bisher eingesetzen, auf Fettsäure bzw. Seifen basierenden, anionaktiven Sammlern eine Voraussetzung für ihre Funktion ist. Das erfindungsgemäße Verfahren erlaubt daher auch die Verwendung von weichem Wasser. Die sehr feine Verteilung der Calciumsalze und deren produktspezifische Eigenschaften gewährleisten hierbei einen ausgezeichneten Sammlereffekt, der u.a. auch in verbesserten Weißgraden zum Ausdruck kommt.

Die Öl-in-Wasser-Dispersionen von Calciumsalzen der Fett- und/oder Harzsäuren können ohne jede Vorbehandlung direkt aus dem Lagertank an beliebiger Stelle in den De-inking Prozeß eingebracht werden, da keine Umsetzung mehr erforderlich ist, wodurch die Sammlerfunktion spontan ausgeübt wird. Dadurch entstehen auch beim Stoffaufschlag im Hochkonsistenzbereich bei Stoffdichten yon 15 bis 20 % keinerlei Nachteile. Auch eine Zugabe erst unmittelbar vor dem De-inking Aggregat wird ohne Nachteile möglich.

Aufgrund ihrer erhöhten Oberflächenaktivität bewirken die Öl-in-Wasser-Dispersionen von Calciumsalzen der Fett- und/oder Harzsäuren eine ausgezeichnete Ablösung und Sammlung der Druckfarbenpartikel.

Der lipophile Rest der Calciumsalze der Fett- und/oder Harzsäuren kann aus Alkyl-, Alkenyl-, Hydroxyalkyl-bzw. Hydroxyalkenylresten mit 8 bis 22 C-Atomen bestehen, die linear, verzweigt, geradzahlig, ungeradzahlig oder kondensiert-polycyclisch sein können. Auch können Mischungen der genannten Calciumsalze von Fett- und/oder Harzsäuren verwendet werden. Bevorzugt sind solche Reste mit 12 bis 18 C-Atomen. Als Beispiele für die im Sinne der Erfindung einzusetzenden Fett-bzw. Harzsäuren seien genannt: Fettsäuren mit 12 bis 18 C-Atomen, einzeln oder im Gemisch, Talgfettsäure, Palmölfettsäure, synthetische Fettsäuren mit Säurezahlen im Bereich von 190 bis 200, Abietinsäure und insbesondere tierische Fettsäuren mit 12 bis 18 C-Atomen.

Wenn im Zusammenhang mit der O/W-Dispersion von "Normaltemperatur" die Rede ist, so sind hierunter übliche Umgebungs- bzw. Raumtemperaturen zu verstehen, die gegebenenfalls von beispielsweise +4 bis ÷30 °C reichen können. Das De-inking-Verfahren selbst wird vorzugsweise bei Temperaturen im Bereich von 40 bis 50 °C durchgeführt; selbstverständlich sind die O/W-Dispersionen auch in diesem Temperaturbereich flüssig.

Die Calciumsalze der Fett- bzw. Harzsäuren liegen in der O/W-Dispersion in einer derartig feinen Verteilung vor, wie sie für stabile O/W-Dispersionen erforderlich bzw. üblich ist.

Im Sinne der vorliegenden Erfindung werden vorzugsweise Öl-in-Wasser-Dispersionen mit einem Feststoffanteil von 10 bis 50 Gew.-%, bezogen auf die Gesamtdispersion, eingesetzt. Hierbei sind Feststoffanteile von 35 bis 40 Gew.-%, bezogen auf die Gesamtdispersion, besonders bevorzugt.

Im Sinne der Erfindung ist es weiterhin bevorzugt, daß man Öl-in-Wasser-Dispersionen mit einem Gehalt von 70 bis 90 Gew.-% an Calciumsalzen der Fett- und/oder Harzsäuren, bezogen auf den vorstehend angegebenen Feststoffanteil, einsetzt.

Die im Sinne der Erfindung zu verwendenden Öl-in-Wasser-Dispersionen enthalten ferner nichtionische und/ oder anionische Dispergiermittel. Hierbei sind nichtionische Dispergiermitel bevorzugt, die bereits bei der Herstellung der Dispersionen diesen beigefügt werden. Dabei werden, bezogen auf die Calciumsalze der Fett- und/oder Harzsäuren, vorzugsweise 1 bis 40 Gew.-% nichtionische und/oder anionische Dispergiermittel eingesetzt. Werden anionische Dispergiermittel eingesetzt, so betragen diese üblicherweise 1 bis 10 Gew.-%, bezogen auf die Calciumsalze der Fett- und/oder Harzsäuren in der Dispersion.

Als nichtionische Dispergiermitteln können beispielsweise Alkylpolyglykolether, iso-Alkylpolyglykolether, Hydroxyalkylpolyglykolether, Alkenylpolyglykolether, Alkylarylpolyglykolether, Acylpolyglykolester und Polyoxyethylenglycerinfettsäureester, mit jeweils 8 bis 22 C-Atomen im Kohlenwasserstoffrest und 6 bis 30 Mol Ethylenoxid, verwendet werden.

Als anionaktive Dispergiermittel können beispielsweise Alkylsulfonate, Alkylarylsulfonate, Alkylsulfate, Alkylpolyglykolethersulfate, Alkylarylpolyglykolethersulfate und Eiweißfettsäurekondensate verwendet werden. Der Ethylenoxidanteil der Alkylpolyglykolethersulfate und Alkylarylpolyglykolethersulfate beträgt 2 bis 25 Mol. Die genannten anionaktiven Dispergiermittel weisen Kohlenwasserstoffreste mit 8 bis 22 C-Atomen auf. Die anionaktiven Dispergiermittel kommen üblicherweise in Form ihrer Alkali- und/oder Aminsalze zur Anwendung.

Zur Herstellung der im Sinne der Erfindung einzusetzenden Öl-in-Wasser-Dispersionen geht man vorteilhafterweise so vor, daß man die Fett-und/oder Harzsäuren in mittels Natriumhydroxid alkalisch eingestellter wäßriger Lösung mit einem stöchiometrischen Überschuß an Calcium - vorzugsweise in Form von Calciumhydroxid - umsetzt, wobei man den Lösungen zuvor geeignete nichtionische und/oder anionische Dispergiermittel zufügt.

Gemäß einer speziellen Ausführungsform der vorliegenden Erfindung führt man das Verfahren zum De-inken von bedrucktem Altpapier in der Weise aus, daß man im Stofflöser eine Kombination der folgenden Komponenten einsetzt:

(a) 0,5 bis 2 Gew.-% Natriumhydroxid (100 %ig);

(b) 2 bis 5 Gew.-% Alkalimetallsilikat

(c) 0,1 bis 0,3 Gew.-% Diethylentriaminpentaessigsäure-Natriumsalz (DTPA) (40 %ige wäßrige Lösung);

(d) 0,5 bis 3 Gew.-% Wasserstoffperoxid (100 %ig);

(e) 0,2 bis 1,5 Gew.-% Öl-in-Wasser-Dispersion von Fettsäure- und/oder Harzsäure-Calciumsalzen;

(f) 0 bis 0,5 Gew.-% nichtionische Dispergiermittel.

Hierbei beziehen sich die angegebenen Mengen jeweils auf die Menge des eingesetzten Altpapiers.

Als Alkalimetallsilikate (Komponente b) kommen in der Regel handelsübliche Wasserglaslösungen - Natron-und/oder Kaliwassergläser - zum Einsatz. Bevorzugt werden hierbei Natronwassergläser mit einem Gewichtsverhältnis $SiO_2/Na_2O$ von 3,3 : 1. Die zu verwendenden Öl-in-Wasser-Dispersionen (Komponente e) entsprechen den vorstehenden Ausführungen.

Zusätzlich zu den Dispergiermitteln, die in den O/W-Dispersionen ohnehin enthalten sind, können gegebenenfalls weitere nichtionische Dispergiermittel (Komponente f) im Verfahren eingesetzt werden. Hinsichtlich der Art der hier zu verwendenden nichtionischen Dispergiermittel gelten die vorstehenden Ausführungen in gleicher Weise. Hierbei ist es bevorzugt, daß man 0,05 bis 0,1 Gew.-% an nichtionischen Dispergiermitteln, gleichfalls bezogen auf Altpapier, einsetzt; insbesondere $C_{8-22}$-Alkyl-polyglykolether und/oder $C_{8-22}$-Acyl-polyglykolester, jeweils mit 6 bis 30 Mol Ethylenoxid.

Die Erfindung wird anhand der nachfolgenden Beispiele erläutert.

Beispiele

100 g atro (= 110 g lutro) bedrucktes Altpapier (atro = absolut trocken; lutro = lufttrocken), bestehend aus 100 % Tageszeitungen, wurden in 1890 ml wäßrige Chemikalienflotte eingetragen und bei einer Temperatur von ca. 45 °C mittels Dispergierscheibe (2500 UpM) 15 min aufgeschlagen. Der Härtegrad des verwendeten Wassers lag bei ca. 17 °d.

Die eingesetzten Chemikalien und deren Konzentrationen waren - jeweils bezogen auf Trockenstoff des Altpapiers - wie folgt:

| | |
|---|---|
| 1,0 % | Natriumhydroxid (100 %ig) |
| 3,0 % | Natronwasserglas (Gew.-Verh. $SiO_2/Na_2O = 3,3:1$) |
| 0,2 % | DTPA (Handelsware, 40 %ig) |
| 0,85 % | Wasserstoffperoxid (100 %ig) |
| 0,7 % | Sammler |

Die jeweilige Zusammensetzung des "Sammlers" wurde variiert und ist aus den nachstehenden Beispielen gemäß der Erfindung sowie den Vergleichsbeispielen ersichtlich.

Die Reaktionszeit nach dem Stoffaufschlag betrug 2 h, entsprechend der Quellzeit in den Bütten.

Anschließend wird die 5 %ige Stoffsuspension mit Wasser von ca. 17 °d auf 4000 ml aufgefüllt und 5 min entstippt.

Die entstippte Stoffsuspension wurde in einer Laborflotationszelle mit Wasser obigen Härtegrades bis zur Höhe des Schaumüberlaufes der Zelle aufgefüllt und anschließend 10 min flotiert, wobei durch Wasserzugabe das Niveau in Höhe des Schaumüberlaufes gehalten wurde.

Der resultierende Gutstoff wurde dann auf ca. 20 % Stoffdichte eingedickt.

Der eingedickte Gutstoff wurde durch Zugabe von 800 ml Wasser von ca. 17 °d auf eine Stoffdichte von ca. 4 % verdünnt, aufgeschlagen und mit verdünnter Schwefelsäure auf pH-Wert 6 angesäuert.

Von dieser Stoffsuspension wurden dann 100 g mit Wasser auf 500 ml aufgefüllt, woraus eine Stoffdichte von ca. 0,8 % resultierte, und über ein Filterblatt ($\theta$ 12 cm) abgenutscht.

Das so entstandene Blatt wurde nach der Glättung getrocknet.

Die Weißgradmessung erfolgte nach Elrepho R 457.

Beispiel 1

Es wurde wie vorstehend beschrieben gearbeitet, als Sammler kamen 0,7 Gew.-% einer Calciumsalz-Dispersion zum Einsatz, deren Rezeptur wie folgt war:

| | |
|---|---|
| 60 Teile | tierische $C_{12-18}$-Fettsäure |
| 12 Teile | $C_{18}$-Alkylpolyglykolether-20 EO |
| 1,5 Teile | Natriumhydroxid |
| 8,6 Teile | Calciumhydroxid |
| 123,5 Teile | Wasser |

Weißgrad: 59,1 %.

Beispiel 2

Es wurde wie vorstehend beschrieben gearbeitet, als Sammler kamen 0,7 Gew.-% einer Calciumsalz-Dispersion zum Einsatz, deren Rezeptur wie folgt war:

| | |
|---|---|
| 60 Teile | tierische $C_{12-18}$-Fettsäure |
| 9 Teile | $C_{18}$-Alkylpolyglykolether-20 EO |
| 3 Teile | Abietinsäure-polyglykolester-85% EO (bezogen auf Abietinsäure) |
| 1,5 Teile | Natriumhydroxid |
| 8,6 Teile | Calciumhydroxid |
| 123,5 Teile | Wasser |

Weißgrad: 59,0 %.

Beispiel 3

Es wurde wie vorstehend beschrieben gearbeitet, als Sammler kamen 0,7 Gew.-% einer Calciumsalz-Dispersion zum Einsatz, deren Rezeptur wie folgt war:

| | |
|---|---|
| 60 Teile | tierische $C_{12-18}$-Fettsäure |
| 9 Teile | $C_{18}$-Alkylpolyglykolether-20 EO |
| 3 Teile | Polyoxyethylenglycerin-$C_{16/18}$-fettsäure-ester-20 EO |
| 1,5 Teile | Natriumhydroxid |
| 8,6 Teile | Calciumhydroxid |
| 123,5 Teile | Wasser |

Weißgrad: 59,0 %.

## Beispiel 4

Es wurde wie vorstehend beschrieben gearbeitet, als Sammler kamen 0,7 Gew.-% einer Calciumsalz-Dispersion zum Einsatz, deren Rezeptur wie folgt war:

| | |
|---|---|
| 60 Teile | tierische $C_{12-18}$-Fettsäure |
| 9 Teile | $C_{18}$-Alkylpolyglykolether-20 EO |
| 3 Teile | $C_{12-18}$-Alkylsulfonat-Na-Salz |
| 1,5 Teile | Natriumhydroxid |
| 8,6 Teile | Calciumhydroxid |
| 123,5 Teile | Wasser |

Weißgrad: 58,0 %.

## Beispiel 5

Es wurde wie vorstehend beschrieben gearbeitet, als Sammler kamen 0,7 Gew.-% einer Calciumsalz-Dispersion zum Einsatz, deren Rezeptur wie folgt war:

| | |
|---|---|
| 60 Teile | tierische $C_{12-18}$-Fettsäure |
| 9 Teile | $C_{18}$-Alkylpolyglykolether-20 EO |
| 3 Teile | $C_{12}$-Alkylsulfat-Na-Salz |
| 1,5 Teile | Natriumhydroxid |
| 8,6 Teile | Calciumhydroxid |
| 123,5 Teile | Wasser |

Weißgrad: 58,1 %

## Beispiel 6

Es wurde wie vorstehend beschrieben gearbeitet, als Sammler kamen 0,7 Gew.-% einer Calciumsalz-Dispersion zum Einsatz, deren Rezeptur wie folgt war:

| | |
|---|---|
| 60 Teile | Talgfettsäure |
| 12 Teile | $C_{18}$-Alkylpolyglykolether-20 EO |
| 1,5 Teile | Natriumhydroxid |
| 8,6 Teile | Calciumhydroxid |
| 123,5 Teile | Wasser |

Weißgrad: 59,1 %.

## Beispiel 7

Es wurde wie vorstehend beschrieben gearbeitet, als Sammler kamen 0,7 Gew.-% einer Calciumsalz-Dispersion zum Einsatz, deren Rezeptur wie folgt war:

| | |
|---|---|
| 60 Teile | synthetische Fettsäure (SZ 190 bis 200) |
| 12 Teile | $C_{18}$-Alkylpolyglykolether-20 EO |
| 1,5 Teile | Natriumhydroxid |
| 8,6 Teile | Calciumhydroxid |
| 123,5 Teile | Wasser |

Weißgrad: 59,9 %.

## Vergleichsbeispiel 1

Es wurde wie vorstehend beschrieben gearbeitet, wobei als Sammler 0,7 Gew.-% handelsübliche De-inking-Seife (Natrium-Seife von $C_{10-18}$-Fettsäuren) zum Einsatz kamen.
Weißgrad: 57,4 %

## Vergleichsbeispiel 2

Es wurde wie vorstehend beschrieben gearbeitet, als Sammler kamen 0,7 Gew.-% einer handelsüblichen Emulsion von Fettsäuren und/oder Harzsäuren mit mehr als 10 C-Atomen zum Einsatz.
Weißgrad: 55,9 %.

Wie die Vergleichsbeispiele - die dem Stand der Technik entsprechen - zeigen, resultieren bei der Durchführung des Verfahrens in der erfindungsgemäßen Art und Weise erheblich bessere Weißgrade, wobei zu berücksichtigen ist, daß in der Praxis eine Steigerung des Weißgrades um nur 1 % eine beträchtliche Verbesserung darstellt. Anders ausgedrückt besagt dies, daß sich - bei gleicher Prozeßdauer - bei dem Verfahren gemäß dem Stand der Technik insgesamt schlechtere De-inking-Resultate ergeben. Demgegenüber erfolgt beim erfindungsgemäßen Verfahren eine sofortige selektive Flotation, die auch in den höheren Weißgrad-Werten zum Ausdruck kommt.

## Patentansprüche

1. Verfahren zum De-inken von bedrucktem Altpapier durch

(a) Behandeln des Papierstoffes im Stofflöser bei alkalischen pH-Werten mittels Alkalimetallsilikat, oxidativ wirkenden Bleichmitteln, höheren Fett- und/oder Harzsäuren mit 8 bis 22 C-Atomen, Dispergiermitteln und

(b) Ausscheiden der abgelösten Druckfarbenteilchen aus der Faserstoffsuspension durch Flotation,

dadurch gekennzeichnet, daß man die Fett- und/oder Harzsäuren in Form ihrer Erdalkalimetallsalze in feiner Verteilung zusammen mit Dispergiermittel in einer bei Normaltemperatur im Bereich von 4 bis 30 °C flüssigen Öl-in-Wasser-Dispersion einsetzt.

2. Verfahren nach Anspruch 1, dadurch gekennzeichnet, daß man die Fett- und/oder Harzsäuren in Form ihrer Calciumsalze einsetzt.

3. Verfahren nach Ansprüchen 1 und 2, dadurch gekennzeichnet, daß der lipophile Rest der Erdalkalimetallsalze der Fett- und/oder Harzsäuren aus Alkyl-, Alkenyl-, Hydroxyalkyl- und/oder Hydroxyalkenylresten mit 8 bis 22 C-Atomen, vorzugsweise mit 12 bis 18 C-Atomen, besteht, die linear, verzweigt, geradzahlig, ungeradzahlig oder kondensiert-polycyclisch sind oder aus Mischungen der genannten lipophilen Reste besteht.

4. Verfahren nach Ansprüchen 1 bis 3, dadurch gekennzeichnet, daß man Öl-in-Wasser-Dispersionen mit einem Feststoffgehalt von 10 bis 50 Gew.-%, vorzugsweise 35 bis 40 Gew.-%, bezogen auf die Gesamtdispersion, einsetzt.

5. Verfahren nach Ansprüchen 1 bis 4, dadurch gekennzeichnet, daß man Öl-in-Wasser-Dispersionen mit einem Gehalt von 70 bis 90 Gew.-% an Erdalkalimetallsalzen der Fett- und/oder Harzsäuren, bezogen auf den Feststoffgehalt, einsetzt.

6. Verfahren nach Ansprüchen 1 bis 5, dadurch gekennzeichnet, daß man Öl-in-Wasser-Dispersionen mit einem Gehalt von 1 bis 40 Gew.-% nichtionischen und/oder anionischen Dispergiermitteln, bevorzugt nichtionischen Dispergiermitteln, bezogen auf die Erdalkalimetallsalze der Fett- und/oder Harzsäuren einsetzt.

7. Verfahren nach Ansprüchen 1 bis 6, dadurch gekennzeichnet, daß man die nichtionischen Dispergiermittel auswählt aus der Gruppe der Alkylpolyglykolether, iso-Alkylpolyglykolether, Hydroxyalkylpolyglykolether, Alkenylpolyglykolether, Alkylarylpolyglykolether, Acylpolyglykolester und Polyoxyethylenglycerinfettsäureester, mit jeweils 8 bis 22 C-Atomen im Kohlenwasserstoffrest und 6 bis 30 Mol Ethylenoxid.

8. Verfahren nach Ansprüchen 1 bis 6, dadurch gekennzeichnet, daß man die anionaktiven Dispergiermittel auswählt aus der Gruppe Alkylsulfonate, Alkylarylsulfonate, Alkylsulfate, Alkylpolyglykolethersulfate mit 2 bis 25 Mol Ethylenoxid, Alkylarylpolyglykolethersulfate mit 2 bis 25 Mol Ethylenoxid und Eiweißfettsäurekondensate, mit jeweils 8 bis 22 C-Atomen im Kohlenwasserstoffrest, in Form ihrer Alkalimetall- und/oder Aminsalze.

9. Verfahren nach Ansprüchen 1 bis 8, dadurch gekennzeichnet, daß man im Stofflöser eine Kombination folgender Komponenten, jeweils bezogen auf Altpapier, einsetzt:
(a) 0,5 bis 2 Gew.-% Natriumhydroxid (100 %ig),
(b) 2 bis 5 Gew.-% Alkalimetallsilikat,
(c) 0,1 bis 0,3 Gew.-% Diethylentriaminpentaessigsäure-Natriumsalz (40 %ige wäßrige Lösung),
(d) 0,5 bis 3 Gew.-% Wasserstoffperoxid (100 %ig),
(e) 0,2 bis 1,5 Gew.-% Öl-in-Wasser-Dispersion von Fettsäure-und/oder Harzsäure-Calciumsalzen,
(f) 0 bis 0,5 Gew.-% nichtionische Dispergiermittel.

10. Verfahren nach Anspruch 9, dadurch gekennzeichnet, daß man als Komponente (f) 0.05 bis 0,1 Gew.-% $C_{8-22}$-Alkylpolyglykolether, und/oder $C_{8-22}$-Acylpolyglykolester jeweils mit 6 bis 30 Mol Ethylenoxid einsetzt.

**Claims**

1. A process for deinking printed waste paper by
(a) treatment of the paper pulp in a pulper at alkaline pH values using alkali metal silicate, oxidative bleaches, higher fatty acids and/or resinic acids containing 8 to 22 carbon atoms, dispersants and
(b) separation of the detached printing ink particles from the fibre suspension by flotation,
characterized in that the fatty acids and/or resinic acids are used in the form of their alkaline earth metal salts in fine distribution together with dispersants in an oil-in-water dispersion which is liquid at normal temperatures in the range from 4 to 30°C.

2. A process as claimed in claim 1, characterized in that the fatty acids and/or resinic acids are used in the form of their calcium salts.

3. A process as claimed in claims 1 and 2, characterized in that the lipophilic residue of the alkaline earth metal salts of the fatty and/or resinic acids consists of $C_{8-22}$ and preferably $C_{12-18}$ alkyl, alkenyl, hydroxyalkyl and/or hydroxyalkenyl radicals which may be linear, branched, even-numbered, odd-numbered or condensed-polycyclic, or of mixtures of such lipophilic radicals.

4. A process as claimed in claims 1 to 3, characterized in that the oil-in-water dispersions used have a solids content of 10 to 50% by weight and preferably 35 to 40% by weight, based on the dispersion as a whole.

5. A process as claimed in claims 1 to 4, characterized in that the oil-in-water dispersions used contain from 70 to 90% by weight alkaline earth metal salts of the fatty and/or resinic acids, based on the solids content.

6. A process as claimed in claims 1 to 5, characterized in that the oil-in-water dispersions used contain 1 to 40% by weight nonionic and/or anionic dispersants, preferably nonionic dispersants, based on the alkaline earth metal salts of the fatty and/or resinic acids.

7. A process as claimed in claims 1 to 6, characterized in that the nonionic dispersants are selected from the group consisting alkyl polyglycol ethers, isoalkyl polyglycol ethers, hydroxyalkyl polyglycol ethers, alkenyl polyglycol ethers, alkylaryl polyglycol ethers, acyl polyglycol esters and polyoxyethylene glycerol fatty acid esters, in each case containing 8 to 22 carbons in the hydrocarbon radical and 6 to 30 mol ethylene oxide.

8. A process as claimed in claims 1 to 6, characterized in that the anionic dispersants are selected from the group consisting alkyl sulfonates, alkylaryl sulfonates, alkyl sulfates, alkyl polyglycol ether sulfates containing 2 to 25 mol ethylene oxide, alkylaryl polyglycol ether sulfates containing 2 to 25 mol ethylene oxide and protein fatty acid condensates, in each case containing 8 to 22 carbon atoms in the hydrocarbon radical, in the form of their alkali metal and/or amine salts.

9. A process as claimed in claim 1, characterized in that a combination of the following components is used in the pulper, based on waste paper:
(a) 0.5 to 2 % by weight sodium hydroxide (100%),
(b) 2 to 5 % by weight alkali metal silicate,
(c) 0.1 to 0.3 % by weight diethylenetriamine pentaacetic acid, sodium salt (40% aqueous solution)
(d) 0.5 to 3 % by weight hydrogen peroxide (100%)
(e) 0.2 to 1.5 % by weight oil-in-water dispersion of fatty acid and/or resinic acid calcium salts
(f) 0 to 0.5 % by weight nonionic dispersants.

10. A process as claimed in claim 9, characterized

in that $C_{8-22}$ alkyl polyglycol ethers and/or $C_{8-22}$ acyl polyglycol esters, in each case with 6 to 30 mol ethylene oxide, are used as component (f) in a quantity of 0.05 to 0.1% by weight.

**Revendications**

1. Procédé pour le désencrage de vieux papiers imprimés par
(a) traitement de la pâte de papier dans le broyeur à des valeurs de pH alcalines au moyen de silicate de métal alcalin, d'agents de blanchiment agissant par oxydation, d'acides gras et/ou résiniques supérieurs contenant de 8 à 22 atomes de carbone, d'agents dispersants; et
(b) précipitation des particules séparées d'encres d'imprimerie hors de la suspension de la matière fibreuse par flottation,
**caractérisé en ce qu'**on met en oeuvre les acides gras et/ou résiniques sous forme de leurs sels de métaux alcalino-terreux finement divisés, conjointement avec des agents dispersants dans une dispersion du type huile-dans-l'eau liquide à température normale dans le domaine de 4 à 30° C.

2. Procédé selon la revendication 1, **caractérisé en ce qu'**on met en oeuvre les acides gras et/ou résiniques sous forme de leurs sels de calcium.

3. Procédé selon les revendications 1 et 2, **caractérisé en ce que** le radical lipophile des sels de métaux alcalino-terreux des acides gras et/ou résiniques est constitué d'un radical alkyle, d'un radical alcényle, d'un radical hydroxyalkyle et/ou d'un radical hydroxyalcényle contenant de 8 à 22 atomes de carbone, de préférence de 12 à 18 atomes de carbone, qui peut être linéaire, ramifié, d'ordre pair, d'ordre impair ou condensé-polycyclique, ou bien il est constitué de mélanges des radicaux lipophiles mentionnés.

4. Procédé selon les revendications 1 à 3, **caractérisé en ce qu'**on met en oeuvre des dispersions du type huile-dans-l'eau avec une teneur en matières solides de 10 à 50% en poids, de préférence de 35 à 40% en poids, rapportées à la dispersion totale.

5. Procédé selon les revendications 1 à 4, **caractérisé en ce qu'**on met en oeuvre des dispersions du type huile-dans-l'eau avec une teneur de 70 à 90% en poids de sels de métaux alcalino-terreux des acides gras et/ou résiniques rapportés à la teneur en matières solides.

6. Procédé selon les revendications 1 à 5, **caractérisé en ce qu'**on met en ouvre des dispersions du type huiledans-l'eau avec une teneur de 1 à 40% en poids d'agents dispersants non ioniques et/ou anioniques, de préférence des agents dispersants non ioniques, rapporté aux sels de métaux alcalino-terreux des acides gras et/ou résiniques.

7. Procédé selon les revendications 1 à 6, **caractérisé en ce qu'**on choisit les agents dispersants non ioniques parmi le groupe comprenant les éthers d'alkylpolyglycols, les éthers d'iso-alkylpolyglycols, les éthers d'hydroxyalkylpolyglycols, les éthers d'alcénylpolyglycols, les éthers d'alkylarylpolyglycols, les esters d'acylpolyglycols et les esters d'acides gras de polyoxyéthylèneglycérine, chacun contenant de 8 à 22 atomes de carbone dans le radical d'hydrocarbure et de 6 à 30 moles d'oxyde d'éthylène.

8. Procédé selon les revendications 1 à 6, **caractérisé en ce qu'**on choisit les agents dispersants à action anionique parmi le groupe comprenant les sulfonates d'alkyle, les sulfonates d'alkylaryle, les sulfates d'alkyle, les sulfates d'éthers d'alkylpolyglycols avec de 2 à 25 moles d'oxyde d'éthylène, les sulfates d'éthers d'alkylarylpolyglycols avec de 2 à 25 moles d'oxyde d'éthylène et les condensats d'acides gras d'albumine, chacun contenant de 8 à 22 atomes de carbone dans le radical d'hydrocarbure, sous forme de leurs sels de métaux alcalins et/ou d'amines.

9. Procédé selon les revendications 1 à 8, **caractérisé en ce qu'**on met en oeuvre, dans le broyeur, une combinaison des composants ci-après, chaque fois rapportée aux vieux papiers :

(a) de 0,5 à 2,0 % en poids d'hydroxyde de sodium (à 100%):
(b) de 2 à 5 % en poids de silicate de métal alcalin;
(c) de 0,1 à 0,3% en poids de sel de sodium de l'acide diéthylènetriaminepentacétique (DTPA) (solution aqueuse à 40%);
(d) de 0,5 à 3 % en poids de peroxyde d'hydrogène (à 100%);
(e) de 0,2 à 1,5% en poids de dispersion du type huile dans l'eau de sels de calcium d'acides gras et/ou résiniques;
(f) de 0 à 0,5% en poids d'agents dispersants non ioniques.

10. Procédé selon la revendication 9, **caractérisé en ce que,** comme composant (f), on met en oeuvre de 0,05 à 0,1% en poids d'éthers d'alkyl(en $C_8$-$C_{22}$)polyglycols et/ou d'esters d'acyl(en $C_8$-$C_{22}$)polyglycols, chaque fois avec de 6 à 30 moles d'oxyde d'éthylène.